# EUROPEAN PATENT SPECIFICATION

(11) **EP 2 143 256 B1**
(45) Date of publication and mention of the grant of the patent: **25.09.2019**
(21) Application number: 08743865.1
(22) Date of filing: 13.03.2008
(51) Int. Cl.: H04L 29/08

(54) **SYSTEMS AND METHODS FOR PORTABLE PERSONALIZED RADIO**
SYSTEME UND VERFAHREN FÜR TRAGBARES PERSONALISIERTES RADIO
SYSTÈMES ET PROCÉDÉS DE RADIO PERSONNALISÉE PORTABLE

(30) Priority: 14.03.2007 US 894879 P
(43) Date of publication of application: 13.01.2010
(73) Proprietor: Slacker, Inc., San Diego, CA 92127 (US)
(72) Inventor: KINDIG, Bradley, San Diego, California 92129 (US)
(74) Representative: Mewburn Ellis LLP
(86) International application number: PCT/US2008/056899
(87) International publication number: WO 2008/112924

(56) References cited:
- WO-A-2005/034407
- US-B1- 6 985 694

## Description

### FIELD OF THE INVENTION

The present invention relates generally to the distribution of digital media. More particularly but not exclusively, the present invention relates to systems and methods for personalized digital media distribution over networks and broadcast systems.

### BACKGROUND

The emergence of the Internet, and in particular, broadband connections, along with efficient media compression techniques has lead to rapid growth in the distribution of digital media. Digital audio has preceded digital video in this evolution because its smaller size allowed easier distribution within the constraints of the early Internet and storage systems. Webcasters including Musicmatch, Real Networks, Live365, Launchcast and others began sending digital audio streams to clients across the Internet. While the broadcast media (radio and television) was constrained to relatively small numbers of channels and no interactivity, webcast radio offered a virtually unlimited number of channels with each individual user having the capability interact with their programming.

As more forms of music licensing became available, much of the attention in the digital music space shifted to selling or renting individual tracks or audio. The Apple iTunes store took the lead in selling audio and video programs. Musicmatch, Napster, and Real Networks developed subscription services, offering broad access to content over the term of the subscription.

The introduction of Microsoft 'Janus' technology allowed subscription content to be loaded onto portable devices, provided the device synchronizes with the server periodically to update licensing certifying the subscription is still active. While portable players, along with digital media stores and existing subscription services, allow the user to take their content with them, they require substantial effort on the part of the user. Users must manually acquire each new piece of content and synchronize the content to their portable device. Because users must explicitly request the content they wish to receive, these services are often termed 'pull' models.

WO 2005/034407 A describes a system and method for providing cost-effective broadband mobile services using a hybrid wireless network consisting of wide-area cellular ("3G") supplemented by hotspot caches.

US 6985694 B1 describes a method and system for providing a customized personal radio broadcast. The method and system include an audio element cache that is capable of caching audio elements for each user in a personal radio server system.

### SUMMARY

According to a first aspect of the present invention, a method according to claim 1 is provided.

According to a second aspect of the present invention, an apparatus according to claim 9 is provided.

Further optional features of the present invention are provided by the dependent claims.

Additional aspects of the present invention are further described below with respect to the drawings.

### BRIEF DESCRIPTION OF THE DRAWINGS

The foregoing aspects and the attendant advantages of the embodiments described herein will become more readily apparent by reference to the following detailed description when taken in conjunction with the accompanying drawings wherein:
**FIGURE 1** is an illustration of one embodiment of a system for providing content to multiple clients in accordance with the present invention.
**FIGURE 2** is an illustration of one embodiment of components comprising radio services in accordance with aspects of the present invention.
**FIGURE 3** is an illustration of one embodiment of a sub-system of radio services related to content sequencing in accordance with aspects of the present invention.
**FIGURE 4** is an illustration of one embodiment of a web based personalized radio client in accordance with aspects of the present invention.
**FIGURE 5** is an illustration of one embodiment of a system supporting a sometimes connected player in accordance with aspects of the present invention.
**FIGURE 6** is an illustration of one embodiment of a sometimes connected player in accordance with aspects of the present invention.
**FIGURE 7** is an illustration of one embodiment of a system supporting a sometimes connected satellite radio in accordance with aspects of the present invention.
**FIGURE 8** is an illustration of one embodiment of a sometimes connected satellite radio in accordance with aspects of the present invention.

### DETAILED DESCRIPTION

Embodiments of the present invention address the need for a 'push' model of content distribution uniting portable digital media players, car based media players, home based media players and personal computer based media players. In this model, user interactions with the interfaces of such players are used as a basis for modifying a user profile or personal media profile. The user profile defines favorite media channels, favorite categories or attributes of content within or across channels, custom channels and customizations to channels.

In typical embodiments the user profile is used to facilitate selection or filtering of content on behalf of the user. Thus the user need only express their preferences to access content that is tailored to their tastes. This requires much less effort than acquiring, managing and distributing a personal content library across multiple devices.

While the webcasters described in the Background section provide 'push' systems, including some with personalized profiles, the profiles and intelligence to apply them are centralized on the webcaster's servers. This requires that clients be continuously connected to the servers to access personalized content or to interact with their profile. Thus webcasting has very little penetration in portable players and automobiles where a broadband connection may not be present or may be intermittent at best.

To enable the user to receive and interact with personalized content streams across a variety of devices, in one embodiment of the present invention the user profile is synchronized between client and server elements and media profile driven selection logic distributed.

The system and methods described herein enable interaction with distributed profiles and clients so as to facilitate creation of a personalized, portable radio system. While an exemplary embodiment is described in terms of audio content, it should be clear that the invention applies equally well to audio/video media, images, or other types of multimedia content.

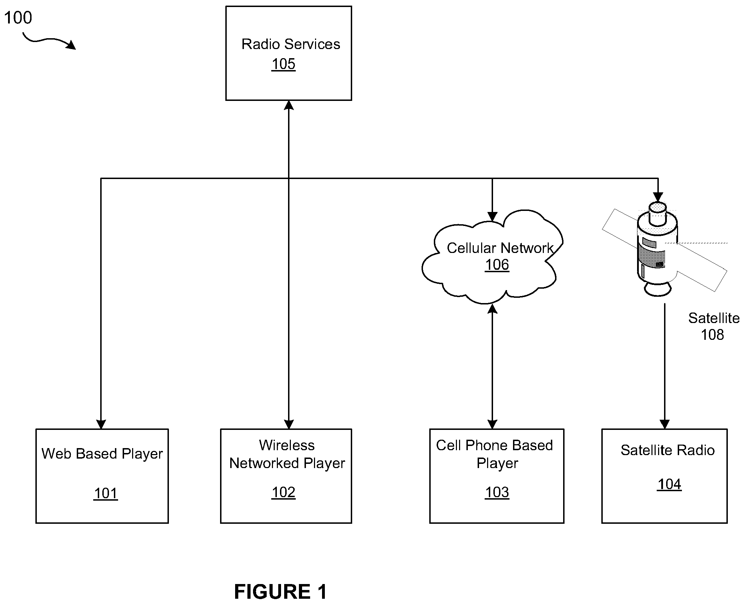

Referring now to Figure 1, there is shown a system 100 in which a variety of clients access, over a variety of networks, services implementing a Personalized Radio Service 100 in a manner consistent with an embodiment of the present invention.

A Web Based Player 101 is a media player that has a persistent connection to the Internet and accesses Radio Services 105 via a web-services interface.

A Wireless Networked Player 102 is a media player that connects periodically or opportunistically to wireless networks, for example, the IEEE 802.11 family of wireless networks. This client synchronizes content and personalization profiles while connected, and need not be connected while rendering personalized radio. This configuration is especially suitable for hand-held portable media players.

A Cellular Phone Based Player 103 connects to Radio Services 105 over a Cellular Network 106. Because Cellular networks may be very busy during peak times but have excess capacity during off-peak hours, the Cell Phone Based Player 103 client can synchronize content and/or personalization profiles during off peak hours, resulting in a more economical use of the network.

A Satellite Radio 104 can utilize the content sequencing logic to de-couple the rendering of audio for the end-user from the reception of content from a Satellite 108. This allows the radio to build a cache of content during periods of good reception, and to play back cached content with no audible drop-outs due to loss of signal in non-real time. The caching of content on this satellite radio client means that the radio can support more channels than the bandwidth of the satellite connection could support if broadcasting in real-time.

The Satellite Radio 104 may also have other connectivity to Radio Services 105. For example, if the Satellite Radio 104 additionally has an uplink to Radio Services 105 via an Internet, Wireless, or Cellular network connection, personalized user profile changes on the device can be synchronized back to the Radio Services 105 and ultimately to other clients. Otherwise, the Satellite Radio 104 can operate on a non-synchronized local profile, or can receive a personalized profile edited on other clients and transmitted across the Satellite link.

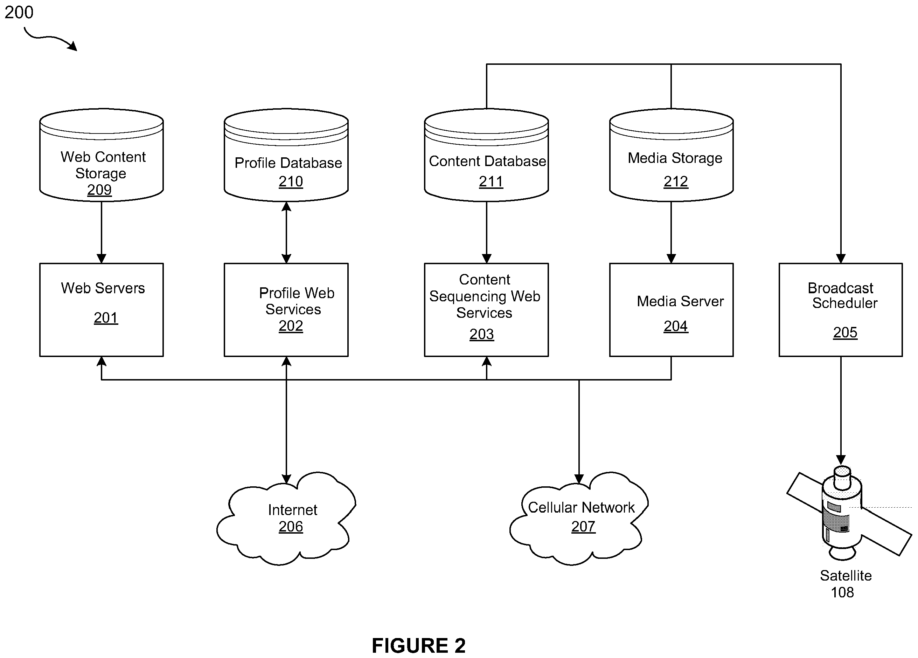

Referring now to Figure 2, components 200 comprising one embodiment of Radio Services 105 are detailed. Web Servers 201 and Web Content Storage 209 serve HTML, Javascript, Images, Macromedia Flash and/or other objects utilized by web browser clients. Profile Web Services 202 and a Profile Database 210 store end-user specific profile information including station customizations, content preferences, and history of recent end-user playback and other events.

Content Sequencing Web Services 203 support content refresh for clients that cache content, as well as 'next track' requests for thin clients such as browser based players. The Content Database 211 may be used to catalog the available content. Media Servers 204 and Media Storage 212 may be used to serve content in the form of digital media files, such as are described in the related applications, to clients. A Broadcast Scheduler 205 decides which tracks should be sent across the satellite link to Satellite 108 for broadcast to Satellite Radios 104. Collectively, the web services are available across the Internet 206 or connected Cellular Networks 207.

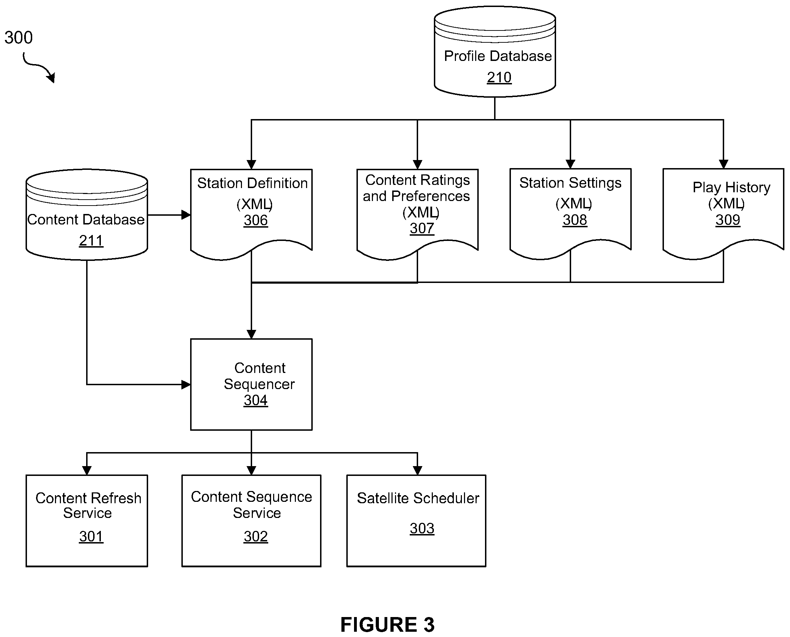

Referring now to Figure 3, one embodiment of sub-systems 300 of Radio Services 105 related to content sequencing are described. At the core of this system is one or more Content Sequencers 304. Content Database 211 and Profile Database 210 provide the data used in Content Sequencer 304. The Content Database 211 stores a catalog of available radio audio tracks and may store the Station Definitions 306 of pre-programmed radio stations.

A Profile Database 210 stores end-user's Content Ratings and Preferences 307, Station Settings 308 and Play History 309. In an exemplary embodiment, this data is expressed as one or more XML documents or trees (nodes). The Profile Database 210 may store Station Definitions 306 where the Station Definition is custom-made by the end-user. In some embodiments user customization information including Content Ratings and Preferences, Station Settings, Play History, and/or other user customization criteria may be stored in a common user profile in Profile Database 210. In other embodiments, user customization information may be stored in one or more separate user profiles.

In some embodiments, user profiles may be synchronized between two or more types of clients, facilitating user profile updating and synchronization across multiple types of clients used by a particular end-user. For example, in some embodiments user profiles may be synchronized between a Web Based Player 101 and a Wireless Networked Player 102, Cell Phone Based Player 103 or Satellite Radio 104 so that the user profile information on all synchronized clients are updated to the most recent profile. Additional details of one embodiment of such synchronization is further described below with respect to a Sometimes Connected Player 501.

Content Sequencer 304 utilizes the Content Database 211 in conjunction with the Station Definition 306, Content Ratings and Preferences 307, and Station Settings 308 to create and maintain a sequence of radio tracks for a particular personalized radio station.

The Content Sequencer 304 may be used by more specialized components to deliver various services to the clients. A Content Refresh Service 301 may utilize the Content Sequencer 304 to optimize the choice of tracks to download to clients. A primary specialization in one embodiment is that the Content Refresh Service 301 typically does not choose tracks that are already in the client cache.

Content Sequence Service 302 handles "thin" clients such as Web Browser based players that do not have their own Content Sequencer 304. These clients simply request the next radio track for playback and then stream the indicated track. When the track finishes, the client requests the subsequent track to play, and so on.

Satellite Scheduler 303 multiplexes the output of Content Sequencer 304 for the stations that are broadcast on the satellite link. The Satellite Scheduler 303 specializes the Content Sequencer 304 output to optimize the utilization of the satellite link: content that is most likely to be played by the players and least likely to already be in the cache is prioritized.

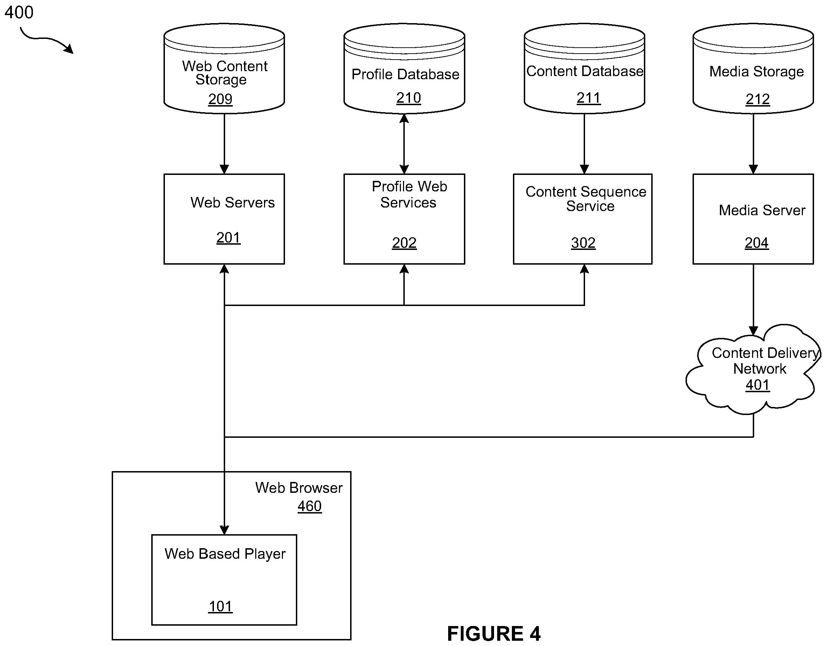

Referring now to Figure 4, the configuration of one embodiment of a web-based personalized radio client system 400 in a manner consistent with the present invention is described.

As shown in Figure 4, a Web Based Player 101 may be loaded into a user's web browser 460 in one exemplary embodiment. The Web Servers 201 load a combination of Javascript programming, Flash objects, HTML, and similar browser content to implement a media player in the browser. On Microsoft operating systems, an Active X control may be employed to drive Windows Media Player or similar functionality within the browser.

In alternate embodiments, the Web Based Player functionality may be embedded in a standalone software client application or hardware devices such as consumer electronics components for a home stereo or entertainment system. However, in this configuration, the Web Based Player is presumed to have a continuous, persistent network connection.

The Web Based Player 101 interacts directly with the Profile Web services 102 to store user preferences as they are indicated by the end user through the user interface of the player. The Web Based Player 101 interacts directly with the Content Sequence Service 302 to get the next track to play in response to various events triggered by the user interface or the underlying media player, for example a user initiated request to skip the current track or the a player report that the current track has finished. The Web Based Player 101, especially in a web browser based incarnation, provides a convenient platform for the user to create and customize radio stations and generally manage preferences. The personal computer based web browser may have a large display, a keyboard, and a pointing device (e.g. mouse) to facilitate the management of personalized radio stations. However, as is discussed hereinafter, the present invention facilitates portability not achievable through the Web Based Player in and of itself.

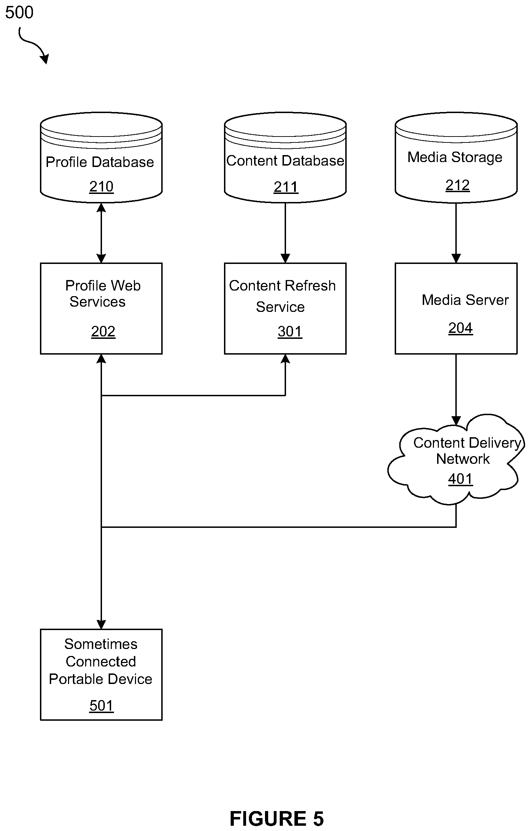

Referring now to Figure 5, one embodiment of a configuration 500 supporting a Sometimes Connected Portable Device 501 is described. The Sometimes Connected Portable Device includes Wireless Networked Players 102 and Cellular Phone Based Players 103. These players are designed to play and manage personalized portable radio stations, such as are described in the related applications, while only intermittently connected to the network.

The Sometimes Connected Portable Device 501 synchronizes profile data including Content Ratings and Preferences 307, Station Settings 308, and Play History 309 while connected. In one embodiment the synchronization is bi-directional. That is, if the Profile Database 210 has a more recent version of an element of the profile, it is copied onto the portable device 501. If the portable device 501 has a more recent version of an element of the profile, it is copied to the profile database. This synchronization may require merging, or the resolution of conflicting elements. In an exemplary embodiment, the Profile Web Services 202 handles the merging and conflict resolution.

Once the portable device 501 has synchronized the end-user profile elements, it can request a content refresh through the Content Refresh Service 301. In an exemplary embodiment, the portable device 501 sends its current inventory associated with the station to refresh to the Content Refresh Service 301. The Content Refresh Service 301 creates a priority ordered list of content for the device to download. The device 501 then downloads the indicated content from a Media Server 204. Optionally, the device 501 may request the content from a Content Delivery Network 401. The device uses the acquired content to supplement the given station. The device then repeats the process for the other stations.

In one exemplary embodiment, the stations are refreshed in order of need for content. That is, stations that are played often and lacking fresh content are refreshed first. Information about the share of device listening time associated with a particular station and the overall freshness of its content may be uploaded to the Content Refresh Service 301 in order to optimize the refresh process.

In one exemplary embodiment, the Station Refresh Service 301 creates a sequence of tracks as would occur in the device if it had access to the entire Content Database 211. The service then eliminates from the sequence any tracks that already reside in the player and returns the given sequence to the device as the list of content to obtain.

In an alternate embodiment, the Station Refresh Service 301 analyzes the inventory for each station and each sub-category within a station and ensures that each category has sufficient content to render a forward sequence of tracks of a target length without undue repetition.

It will be apparent to one skilled in the art that the synchronization of the profile including Station Definition 306, Content Ratings and Preferences 307, Station Settings 308 and Play History 309, along with the transmission of current station inventory and usage, enables the Station Refresh Service 301 to optimize the inventory cached on the device. This allows the Sometimes Connected player 501 to obtain content during relatively brief periods of connectivity and to render quality radio sequences during relatively long periods lacking any connectivity.

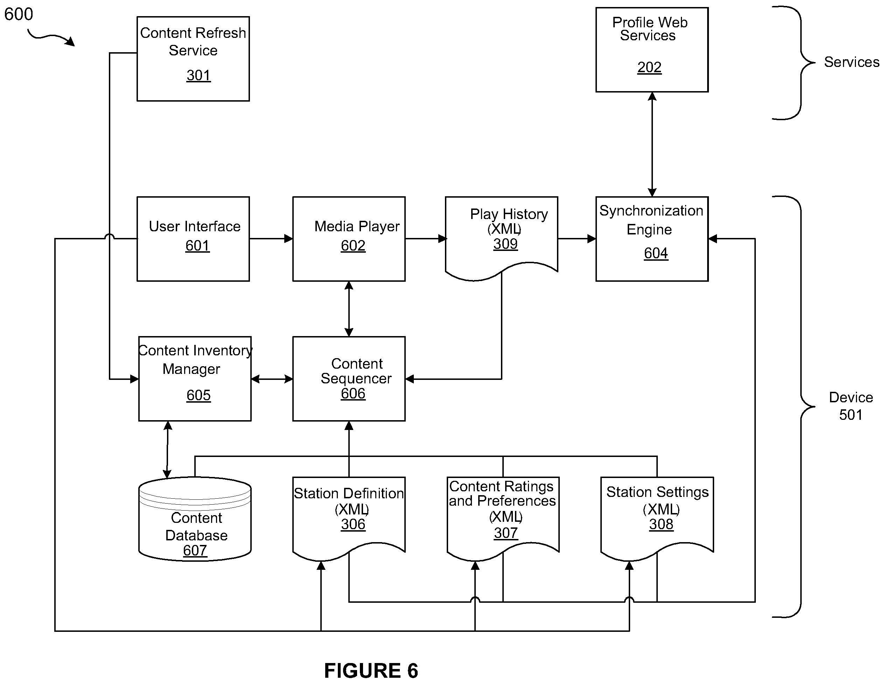

Referring now to Figure 6, one embodiment of a configuration 600 of a Sometimes Connected Player 501 is described in detail. The Content Sequencer 606 implements similar algorithms as the Content Sequencer 304 employed in the server. One skilled in the art will recognize that the two components can share a substantial amount of programming code, and/or may be ported to different programming languages or operating systems as dictated by the target platforms.

As in the server implementation described in Figure 3, the Content Sequencer 606 uses the Station Definition 306, Content Ratings 307 and Station Settings 308, and Play History 309 to sequence the available content cataloged by the Content Database 607. The Content Sequencer feeds the Media Player 602 such that the radio station is rendered for the end-user.

The User Interface 601 controls the playback functions of the media player, and can also be used to facilitate user editing of user profile information, such as the Station Definition, Content Ratings, Station Settings and/or other user customization parameters.

A Synchronization Module, such as Synchronization Engine 604, may be included to manage synchronization. Synchronization Engine 604 manages the bi-directional synchronization of the personalized profile entities, i.e. the Station Definition 306, Content Ratings 307 and Station Settings 308, Play History 309, and/or an other user customization information, where bi-directional connectivity is available. In some embodiments, Synchronization Engine 604 may be configured to synchronize user profiles between two or more clients or two or more different types of clients.

The Content Inventory Manager 605 handles the station refresh operation by connecting to the Content Refresh Service 301. The Content Inventory Manager also handles removing content from the Content Database and local media store to make room for newer, fresher content.

In one exemplary embodiment, the Content Inventory Manager 605 uses the Content Sequencer 606 to rank the content in each station or station sub-category based on how soon the content is likely to be played. Content that is likely to be played soon is considered more important and will not be discarded. Content that is least likely to play is removed from the device periodically, as needed, to make room for incoming content from the content refresh operation or received over the satellite connection. Thus, Content Inventory Manager 605 ensures that the content stored on the device is optimized over time.

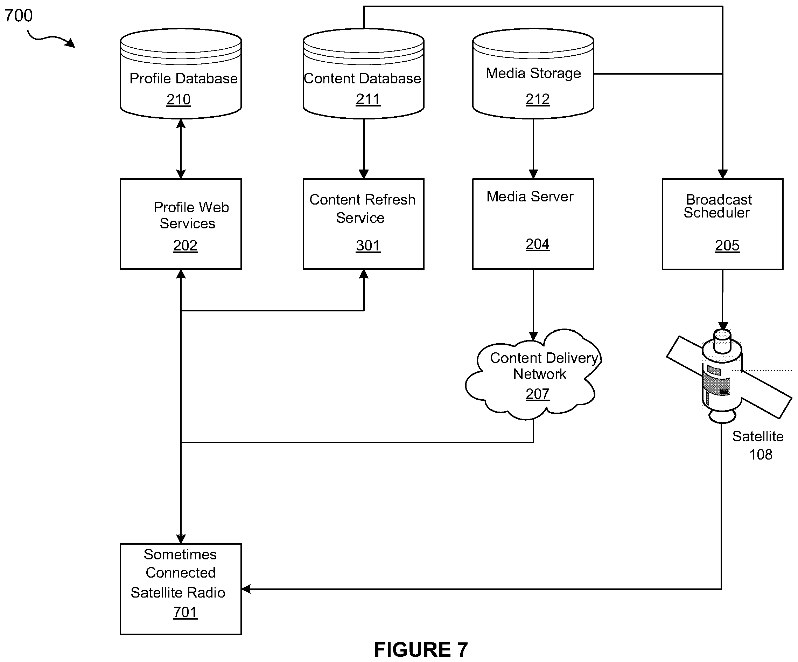

Referring now to Figure 7, one embodiment of a configuration 700 supporting a Sometimes Connected Satellite Radio 701 is described. The Sometimes Connected Satellite Radio 701 is similar to the Sometimes Connected Portable Device 501 shown in Figure 5 and Figure 6, with the additional capability of receiving content from a Satellite 108.

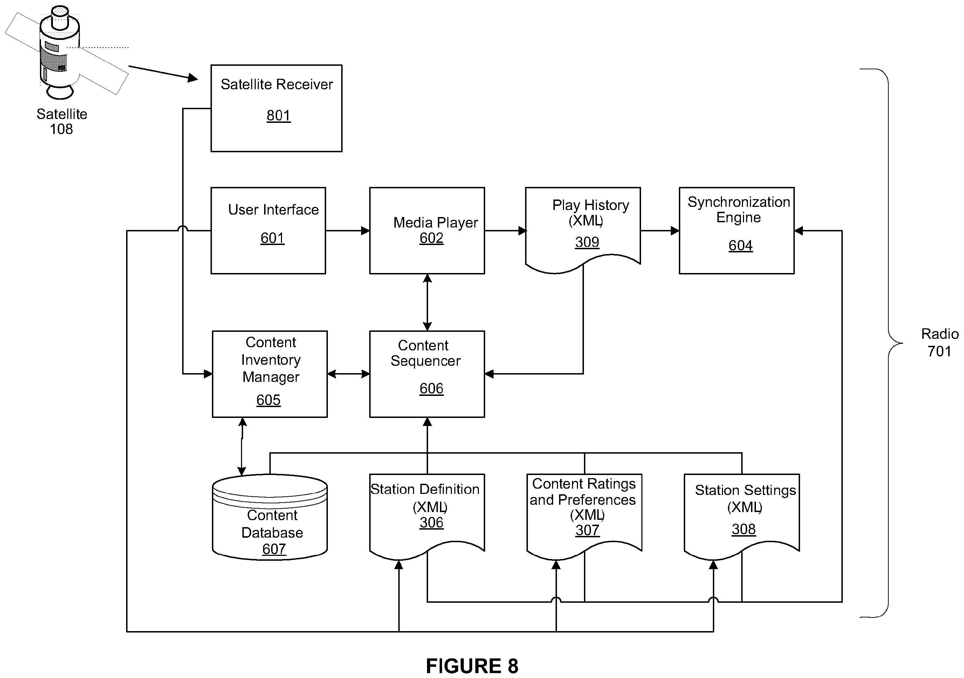

Referring now to Figure 8, details of one embodiment of a Satellite Radio 701 are described. In typical embodiments, the configuration is similar to the configurations described for the Sometimes Connected Portable Player of Figure 5. Addition of a Satellite Receiver 801 allows content to be received from a satellite broadcast, such as from satellite 108.

In one exemplary embodiment, tracks received from satellite 108 are added to the Content Database 607 by the Content Inventory Manager 605. Periodically, the Content Inventory Manager 605 sweeps through the Content Database 607, removing the tracks that are least likely to be needed as described above. In this way, the Satellite Radio 801 optimizes its content to the stations and preferences set by the user.

In some embodiments the Satellite Radio 801 will be configured to connect to the Radio Services 105 via other networks to synchronize user profiles and/or receive content. For example, if the Satellite Radio 801 connects periodically to bi-directional networks such as 802.11 wireless connections, Cellular networks, or wired network connections, the satellite radio will synchronize its profile data and content as described above for Sometimes Connected Portable Devices, such as in conjunction with Synchronization Engine 604.

However, Satellite Radio 801 is not required to establish bidirectional connections and participate in profile data synchronization or Content Refresh Service 301 interactions. In some embodiments, all user profile information such as custom station definitions, preferences, and settings comprising the personalized profile remain local on satellite radio 801.

Some embodiments of the present invention may include computer software and/or computer hardware/software combinations configured to implement one or more processes or functions associated with the present invention such as those described above and/or in the related applications. These embodiments may be in the form of modules implementing functionality in software and/or hardware software combinations. Embodiments may also take the form of a computer storage product with a computer-readable medium having computer code thereon for performing various computer-implemented operations, such as operations related to functionality as describe herein. The media and computer code may be those specially designed and constructed for the purposes of the present invention, or they may be of the kind well known and available to those having skill in the computer software arts, or they may be a combination of both.

Examples of computer-readable media within the spirit and scope of the present invention include, but are not limited to: magnetic media such as hard disks; optical media such as CD-ROMs, DVDs and holographic devices; magneto-optical media; and hardware devices that are specially configured to store and execute program code, such as programmable microcontrollers, application-specific integrated circuits ("ASICs"), programmable logic devices ("PLDs") and ROM and RAM devices. Examples of computer code may include machine code, such as produced by a compiler, and files containing higher-level code that are executed by a computer using an interpreter. Computer code may be comprised of one or more modules executing a particular process or processes to provide useful results, and the modules may communicate with one another via means known in the art. For example, some embodiments of the invention may be implemented using assembly language, Java, C, C#, C++, or other programming languages and software development tools as are known in the art. Other embodiments of the invention may be implemented in hardwired circuitry in place of, or in combination with, machine-executable software instructions.

The foregoing description, for purposes of explanation, used specific nomenclature to provide a thorough understanding of the invention. However, it will be apparent to one skilled in the art that specific details are not required in order to practice the invention. Thus, the foregoing descriptions of specific embodiments of the invention are presented for purposes of illustration and description. They are not intended to be exhaustive or to limit the invention to the precise forms disclosed; obviously, many modifications and variations are possible in view of the above teachings. The embodiments were chosen and described in order to best explain the principles of the invention and its practical applications, they thereby enable others skilled in the art to best utilize the invention and various embodiments with various modifications as are suited to the particular use contemplated. It is intended that the following claims and their equivalents define the scope of the invention.

## Claims

1. A method for selecting content at a content provider system for distribution over a network (105) to a plurality of user devices (101, 102, 103, 104) intermittently connected to the network (105), the method comprising:
storing a plurality of content items within a content database (204, 208) in the content provider system;
storing a plurality of user profiles corresponding to the plurality of user devices in the content provider system, the user profile including play history information;
receiving a first current inventory of ones of the content items stored on a first of the plurality of user devices (101, 102, 103, 104)wherein the first current inventory is sent by the first of the plurality of user devices and is associated with a first station;
storing a plurality of station definitions corresponding to a plurality of stations, at least a first of the station definitions including customization information associated with the first of the plurality of user devices (101, 102, 103, 104);
identifying, based at least in part upon the first current inventory, a first of the user profiles, and the play history thereof, a first plurality of the content items to be distributed to the first of the plurality of user devices (101, 102, 103, 104) wherein the first plurality of the content items includes a first sequence of content items corresponding to the first station and a second sequence of content items corresponding to a second station.

2. The method of claim 1 wherein the determining includes receiving, from the first of the plurality of user devices (101, 102, 103, 104), information relating to the first current inventory.

3. The method of claim 1 further including receiving, from the first of the plurality of user devices (101, 102, 103, 104), information relating to the first of the user profiles.

4. The method of claim 1 wherein the identifying further includes generating, based upon the first of the station definitions, the first of the user profiles, and the first current inventory, the first sequence of content items.

5. The method of claim 1 further including:
receiving, from the second of the plurality of user devices, information relating to the second of the user profiles;
receiving a second current inventory of other ones of content items stored on the second of the plurality of user devices, wherein the second current inventory is sent by the second of the plurality of user devices and is associated with a second of the plurality of stations;
wherein the identifying of the first plurality of content items is further based at least in part on the second current inventory.

6. The method of claim 1 further including:
receiving, from the first of the plurality of user devices, listening time information for the first station and the second station; and
determining an order of distribution of the first sequence of content items and the second sequence of content items to the first of the plurality of user devices at least in part based upon the listening time information.

7. The method of claim 1 wherein the current inventory includes information relating to a first station inventory and a second station inventory, the first plurality of the content items being determined based at least in part upon the first station inventory and the second station inventory.

8. A method according to Claim 1 comprising:
determining a current client cache corresponding to ones of the content items likely stored by ones of the plurality of user devices (101, 102, 103, 104); and
identifying, based at least in part upon the current client cache and the plurality of station definitions, a set of the content items to be broadcast to the plurality of user devices (101, 102, 103, 104).

9. A radio services apparatus for use within a content distribution system, comprising:
a content database in which are stored a plurality of content items;
a profile database in which are stored a plurality of station definitions and a plurality of user profiles, the user profiles including play history information, corresponding to a plurality of user devices (101, 102, 103, 104) intermittently connected to a network (105), at least a first of the plurality of station definitions including customization information associated with the first of the plurality of user devices (101, 102, 103, 104); and
a processor configured to execute a content sequencing routine operative to select content for distribution over the network (105), the content sequencing routine including the following operations:
determining a first current inventory of ones of the content items stored on the first of the plurality of user devices (101, 102, 103, 104), wherein the first content inventory is sent by the first of the plurality of user devices and is associated with a first station;
identifying, based at least in part upon the first current inventory, a first of the plurality of user profiles, and the play history thereof, a first plurality of the content items to be distributed to the first of the plurality of user devices (101, 102, 103, 104) wherein the first plurality of the content items includes a first sequence of content items corresponding to the first station and a second sequence of content items corresponding to a second station.

10. The apparatus of claim 9 wherein the at least one of the plurality of user profiles includes content rating and preference information.

11. The apparatus of claim 9 wherein the at least one of the plurality of user profiles includes station settings information relating to a station corresponding to the at least one of the plurality of station definitions.

12. The apparatus of claim 9 wherein the processor is further configured to execute a content refresh routine responsive to a current inventory of ones of the content items stored on the first of the plurality of user devices wherein the sequence of ones of the plurality of content items to be distributed is influenced by an output of the content refresh routine.

## Patentansprüche

1. Verfahren zur Auswahl von Inhalten in einem Inhaltsanbietersystem zur Verteilung über ein Netzwerk (105) an eine Vielzahl von Benutzervorrichtungen (101, 102, 103, 104), die intermittierend mit dem Netzwerk (105) verbunden sind, wobei das Verfahren Folgendes umfasst:
Speichern einer Vielzahl von Inhaltselementen innerhalb einer Inhaltsdatenbank (204, 208) im Inhaltsanbietersystem;
Speichern einer Vielzahl von Benutzerprofilen, die der Vielzahl von Benutzervorrichtungen im Inhaltsanbietersystem entsprechen, wobei das Benutzerprofil Wiedergabehistorieninformationen umfasst;
Empfangen eines ersten aktuellen Inventars von einem der Inhaltselemente, die auf einer ersten aus der Vielzahl von Benutzervorrichtungen (101, 102, 103, 104) gespeichert sind, wobei das erste aktuelle Inventar durch die erste der Vielzahl von Benutzervorrichtungen gesendet wird und einer ersten Station zugeordnet ist;
Speichern einer Vielzahl von Stationsdefinitionen, die einer Vielzahl von Stationen entsprechen, wobei zumindest eine erste der Stationsdefinitionen Anpassungsinformationen umfasst, die der ersten aus der Vielzahl von Benutzervorrichtungen (101, 102, 103, 104) zugeordnet sind;
Identifizieren eines ersten der Benutzerprofile und der Wiedergabehistorie desselben zumindest teilweise basierend auf dem ersten aktuellen Inventar, wobei eine erste Vielzahl der Inhaltselemente an die erste der Vielzahl von Benutzervorrichtungen (101, 102, 103, 104) zu verteilen ist, wobei die erste Vielzahl der Inhaltselemente eine erste Sequenz von Inhaltselementen, die der ersten Station entsprechen, und eine zweite Sequenz von Inhaltselementen, die einer zweiten Station entsprechen, umfasst.

2. Verfahren nach Anspruch 1, wobei das Bestimmen das Empfangen von Informationen in Bezug auf das erste aktuelle Inventar von der ersten aus der Vielzahl von Benutzervorrichtungen (101, 102, 103, 104) umfasst.

3. Verfahren nach Anspruch 1, ferner umfassend das Empfangen von Informationen in Bezug auf das erste der Benutzerprofile von der ersten aus der Vielzahl von Benutzervorrichtungen (101, 102, 103, 104).

4. Verfahren nach Anspruch 1, wobei das Identifizieren ferner das Erzeugen der ersten Sequenz von Inhaltselementen basierend auf der ersten der Stationsdefinitionen, dem ersten der Benutzerprofile und dem ersten aktuellen Inventar umfasst.

5. Verfahren nach Anspruch 1, ferner umfassend:
Empfangen von Informationen in Bezug auf das zweite der Benutzerprofile von der zweiten aus der Vielzahl von Benutzervorrichtungen;
Empfangen eines zweiten aktuellen Inventars von anderen von Inhaltselementen, die auf der zweiten aus der Vielzahl von Benutzervorrichtungen gespeichert sind, wobei das zweite aktuelle Inventar durch die zweite der Vielzahl von Benutzervorrichtungen gesendet wird und einer zweiten aus der Vielzahl von Stationen zugeordnet ist;
wobei das Identifizieren der ersten Vielzahl von Inhaltselementen weiters zumindest teilweise auf dem zweiten aktuellen Inventar basiert.

6. Verfahren nach Anspruch 1, ferner Folgendes umfassend:
Empfangen von Hörzeitinformationen für die erste Station und die zweite Station von der ersten aus der Vielzahl von Benutzervorrichtungen; und
Bestimmen einer Verteilungsordnung der ersten Sequenz von Inhaltselementen und der zweiten Sequenz von Inhaltselementen an die erste der Vielzahl von Benutzervorrichtungen zumindest teilweise basierend auf den Hörzeitinformationen.

7. Verfahren nach Anspruch 1, wobei das aktuelle Inventar Informationen in Bezug auf ein erstes Stationsinventar und ein zweites Stationsinventar umfasst, wobei die erste Vielzahl der Inhaltselemente zumindest teilweise auf dem ersten Stationsinventar und dem zweiten Stationsinventar basierend bestimmt wird.

8. Verfahren nach Anspruch 1, Folgendes umfassend:
Bestimmen eines aktuellen Klienten-Caches, der einem der Inhaltselemente entspricht, das voraussichtlich von einer der Vielzahl von Benutzervorrichtungen (101, 102, 103, 104) gespeichert wird; und
Identifizieren eines Satzes der Inhaltselemente, die an die Vielzahl von Benutzervorrichtungen (101, 102, 103, 104) zu übertragen sind, zumindest teilweise basierend auf dem aktuellen Klienten-Cache und der Vielzahl von Stationsdefinitionen.

9. Funkdienste-Vorrichtung zur Verwendung innerhalb eines Inhalts-Verteilungssystems, Folgendes umfassend:
eine Inhaltsdatenbank, in der eine Vielzahl von Inhaltselementen gespeichert ist;
eine Profildatenbank, in der eine Vielzahl von Stationsdefinitionen und eine Vielzahl von Benutzerprofilen gespeichert sind, wobei die Benutzerprofile Wiedergabehistorieninformationen umfassen, die einer Vielzahl von Benutzervorrichtungen (101, 102, 103, 104) entsprechen, die intermittierend mit einem Netzwerk (105) verbunden sind, wobei zumindest eine erste der Vielzahl von Stationsdefinitionen Anpassungsinformationen umfasst, die der ersten aus der Vielzahl von Benutzervorrichtungen (101, 102, 103, 104) zugeordnet ist; und
einen Prozessor, der konfiguriert ist, um eine Inhaltssequenzierungsroutine auszuführen, die operativ ist, um Inhalte zur Verteilung über das Netzwerk (105) auszuwählen, wobei die Inhaltssequenzierungsroutine die folgenden Vorgänge umfasst:
Bestimmen eines ersten aktuellen Inventars von einem der Inhaltselemente, die auf der ersten aus der Vielzahl von Benutzervorrichtungen (101, 102, 103, 104) gespeichert sind, wobei das erste Inhaltsinventar durch die erste der Vielzahl von Benutzervorrichtungen gesendet wird und einer ersten Station zugeordnet ist;
Identifizieren eines ersten aus der Vielzahl von Benutzerprofilen und der Wiedergabehistorie desselben zumindest teilweise basierend auf dem ersten aktuellen Inventar, wobei eine erste Vielzahl der Inhaltselemente an die erste der Vielzahl von Benutzervorrichtungen (101, 102, 103, 104) zu verteilen ist, wobei die erste Vielzahl der Inhaltselemente eine erste Sequenz von Inhaltselementen, die der ersten Station entsprechen, und eine zweite Sequenz von Inhaltselementen, die einer zweiten Station entsprechen, umfasst.

10. Vorrichtung nach Anspruch 9, wobei das zumindest eine der Vielzahl von Benutzerprofilen Inhalts-Bewertungs- und -Präferenzinformationen umfasst.

11. Vorrichtung nach Anspruch 9, wobei das zumindest eine der Vielzahl von Benutzerprofilen Stationseinstellungsinformationen in Bezug auf eine Station umfasst, die der zumindest einen der Vielzahl von Stationsdefinitionen entspricht.

12. Vorrichtung nach Anspruch 9, wobei der Prozessor ferner konfiguriert ist, um als Antwort auf ein aktuelles Inventar von einem der Inhaltselemente, die auf der ersten aus der Vielzahl von Benutzervorrichtungen gespeichert sind, eine Inhalts-Aktualisierungsroutine auszuführen, wobei die Sequenz von einem der Vielzahl von zu verteilenden Inhaltselementen durch eine Ausgabe der Inhalts-Aktualisierungsroutine beeinflusst ist.

## Revendications

1. Procédé de sélection de contenu au niveau d'un système fournisseur de contenu pour une distribution sur un réseau (105) à une pluralité de dispositifs utilisateurs (101, 102, 103, 104) connectés par intermittence au réseau (105), ce procédé comprenant :
le stockage d'une pluralité d'éléments de contenu à l'intérieur d'une base de données de contenus (204, 208) dans le système fournisseur de contenu ;
le stockage d'une pluralité de profils d'utilisateurs correspondant à la pluralité de dispositifs utilisateurs du système fournisseur de contenu, le profil d'utilisateur comprenant des informations historiques de lecture ;
la réception d'un premier inventaire actuel de certains des éléments du contenu stockés sur un premier de la pluralité de dispositifs utilisateurs (101, 102, 103, 104), le premier inventaire actuel étant envoyé par le premier de la pluralité de dispositifs utilisateurs et étant associé à une première station ;
le stockage d'une pluralité de définitions de stations correspondant à une pluralité de stations, au moins une première des définitions de stations comprenant des informations personnalisation associées avec le premier de la pluralité de dispositifs utilisateurs (101, 102, 103, 104) ;
l'identification, basée au moins partiellement sur le premier inventaire actuel, d'un premier des profils d'utilisateurs et de l'historique de lecture de celui-ci, d'une première pluralité d'éléments de contenu à distribuer au premier de la pluralité de dispositifs utilisateurs (101, 102, 103, 104), la première pluralité d'éléments de contenu comprenant une première séquence d'éléments de contenu correspondant à la première station et une deuxième séquence d'éléments de contenu correspondant à une deuxième station.

2. Procédé selon la revendication 1, dans lequel la détermination comprend la réception, en provenance du premier de la pluralité de dispositifs utilisateurs (101, 102, 103, 104), d'informations concernant le premier inventaire actuel.

3. Procédé selon la revendication 1, comprenant en outre la réception, en provenance du premier de la pluralité de dispositifs utilisateurs (101, 102, 103, 104), d'informations concernant le premier des profils d'utilisateurs.

4. Procédé selon la revendication 1, dans lequel l'identification comprend en outre la génération, sur la base de la première des définitions de stations, du premier des profils d'utilisateurs et du premier inventaire actuel, de la première séquence d'éléments de contenu.

5. Procédé selon la revendication 1, comprenant en outre :
la réception, en provenance de la pluralité de dispositifs utilisateurs, d'informations concernant le deuxième des profils d'utilisateurs ;
la réception d'un deuxième inventaire actuel d'autres éléments de contenu stockés sur le deuxième de la pluralité de dispositifs utilisateurs, le deuxième inventaire actuel étant envoyé par le deuxième de la pluralité de dispositifs utilisateurs et étant associé avec une deuxième de la pluralité de stations ;
l'identification de la première pluralité d'éléments de contenus est en outre basée au moins partiellement sur le deuxième inventaire actuel.

6. Procédé selon la revendication 1, comprenant en outre :
la réception, en provenance de la pluralité de dispositifs utilisateurs, d'informations de temps d'écoute pour la première station et la deuxième station ; et
la détermination d'un ordre de distribution de la première séquence d'éléments de contenus et de la deuxième séquence d'éléments de contenus au premier de la pluralité de dispositifs utilisateurs au moins partiellement sur la base des informations de temps d'écoute.

7. Procédé selon la revendication 1, dans lequel l'inventaire actuel comprend des informations concernant un premier inventaire de station et un deuxième inventaire de station, la première pluralité des éléments de contenus étant déterminée au moins en partie sur la base du premier inventaire de station et du deuxième inventaire de station.

8. Procédé selon la revendication 1, comprenant :
la détermination d'une mémoire cache client actuelle correspondant à un des éléments de contenus probablement stockés par un de la pluralité de dispositifs utilisateurs (101, 102, 103, 104) ; et
l'identification, au moins en partie sur la base de la mémoire cache client actuelle et de la pluralité de définitions de stations, d'un ensemble d'éléments de contenus à transmettre à la pluralité de dispositifs utilisateurs (101, 102, 103, 104).

9. Appareil de services radio destiné à être utilisé à l'intérieur d'un système de distribution de contenu, comprenant :
une base de données de contenus dans laquelle sont stockés une pluralité d'éléments de contenus ;
une base de données de profils dans laquelle sont stockés une pluralité de définitions de stations et une pluralité de profils d'utilisateurs, les profilés d'utilisateurs comprenant des informations historiques de lecture, correspondant à une pluralité de dispositifs utilisateurs (101, 102, 103, 104) connectés par intermittence à un réseau (105), d'au moins une première de la pluralité de définitions de stations comprenant des informations de personnalisation associées avec le premier de la pluralité de dispositifs utilisateurs (101, 102, 103, 104) ; et
un processeur conçu pour exécuter une routine de séquençage de contenus conçue pour sélectionner du contenu pour une distribution sur le réseau (105), la routine de séquençage de contenu comprenant les opérations suivantes :
détermination d'un premier inventaire actuel de certains des éléments de contenus stockés sur le premier de la pluralité de dispositifs utilisateurs (101, 102,1 03, 104), le premier inventaire de contenu étant envoyé par le premier de la pluralité de dispositifs utilisateurs et étant associé avec une première station ;
l'identification, au moins en partie sur la base du premier inventaire actuel, d'un premier de la pluralité de profils d'utilisateurs et de l'historique de lecture de ceux-ci, d'une première pluralité d'éléments de contenus à distribuer au premier de la pluralité de dispositifs utilisateurs (101, 102, 103, 104), la première pluralité d'éléments de contenus comprenant une première séquence d'éléments de contenus correspondant à la première station et une deuxième séquence d'éléments de contenus correspondant à une deuxième station.

10. Appareil selon la revendication 9, dans lequel l'au moins un de la pluralité de profils d'utilisateurs comprend des informations d'évaluation et de préférence de contenus.

11. Appareil selon la revendication 9, dans lequel l'au moins un de la pluralité de profils d'utilisateurs comprend des informations de réglage de station concernant une station correspondant à l'au moins une de la pluralité de définitions de stations.

12. Appareil selon la revendication 9, dans lequel le processeur est en outre conçu pour exécuter une routine de rafraîchissement de contenu en réponse à un inventaire actuel de certains des éléments de contenus stockés sur le premier de la pluralité de dispositifs utilisateurs, la séquence de certains de la pluralité d'éléments de contenus à distribuer étant influencée par un résultat de la routine de rafraîchissement de contenu.
